# EUROPEAN PATENT APPLICATION

(11) **EP 2 244 470 A2**
(43) Date of publication of application: **27.10.2010**
(21) Application number: 09172371.8
(22) Date of filing: 06.10.2009
(51) Int. Cl.: H04N 5/445

(54) **Display apparatus and control method of the same**

(30) Priority: 22.04.2009 KR 20090034960
(71) Applicant: SAMSUNG ELECTRONICS CO., LTD., Suwon-si Gyeonggi-do 442-742 (KR)
(72) Inventor: Lee, Hyeon-ji, Seoul (KR); Kwon, Yong-hwan, Gyeonggi-do (KR)
(74) Representative: Robinson, Ian Michael

(57) **Abstract**

Disclosed are a display apparatus and a control method of the same. The display apparatus with a display unit includes: a broadcasting receiving unit which receives a broadcasting signal; a display unit; a broadcasting receiving unit which receives a broadcasting signal; and a controller which controls the display unit to display the broadcasting signal and at least one window for executing a selected application, wherein, if the application is selected to be executed while the broadcasting signal is displayed on the display unit, the broadcasting signal and the at least one window are displayed on different display areas of the display unit so that the display of the broadcasting signal and the at least one window are not overlapped.

## Description

### BACKGROUND OF INVENTION

### Field of Invention

Apparatuses and methods consistent with the present invention relate to a display apparatus and a control method of the same, and more particularly, to a display apparatus capable of executing an application and a control method of the same.

### Description of the Related Art

A television has been developed to display various data or to display various contents from a server or the like, contrary to a related art one that displays only a broadcasting signal corresponding to a video signal. Further, a recent television can reproduce multimedia files related to an audio signal, a still image or a moving picture. Like this, as the functions a display apparatus supports become more diversified, a user interface for controlling contents, in particular, a graphic user interface has been being developed gradually.

Meanwhile, when such a graphic user interface is displayed as a partial or full screen on a display unit of the display apparatus, a broadcasting signal being currently displayed is partially or fully covered with the graphic user interface, thereby stopping a user from viewing.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, an aspect of the present invention is to provide a display apparatus and a control method of the same, which can execute an application without interrupting view of a broadcasting signal.

Another aspect of the present invention is to provide a display apparatus and a control method of the same, which can easily switch between a plurality of display areas.

The foregoing and/or other aspects of the present invention can be achieved by providing a display apparatus with a display unit, including: a broadcasting receiving unit which receives a broadcasting signal; an application executing unit which executes at least one application; and a controller which controls the broadcasting signal and at least one window for executing the application to be displayed on different display areas of the display unit so that the broadcasting signal and the window are not overlapped with each other, if the application is selected to be executed while the broadcasting signal is displayed on the display unit.

The display apparatus may further include a user selection unit to select one of the display areas.

The user selection unit may include shortcut buttons corresponding to the display areas, respectively, and the display area may be selected corresponding to the shortcut button if the shortcut button is selected.

The broadcasting signal or application window selected by the user selection unit may be highlighted at edges thereof.

The controller may receive a control signal for controlling the broadcasting signal or executing an application, displayed on the selected display area, and control the broadcasting signal or executes the application on the basis of the received control signal.

The application may include a graphic user interface related to multimedia files.

Another aspect of the present invention can be achieved by providing a method of controlling a display apparatus including a broadcasting receiving unit to receive a broadcasting signal, an application executing unit to execute at least one application, and a display unit, the method including: receiving a selection signal for selecting the application to be executed while the broadcasting signal is displayed on the display unit; and displaying the broadcasting signal and at least one window for executing the application on different display areas of the display unit so that the broadcasting signal and the window are not overlapped with each other.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display apparatus according to an exemplary embodiment of the present invention;
FIG. 2 illustrates an application window of a display unit according to an exemplary embodiment of the present invention;
FIG. 3 illustrates an application window of a display unit according to an exemplary embodiment of the present invention;
FIG. 4 illustrates a user selection unit according to an exemplary embodiment of the display apparatus;
FIG. 5 illustrates a user selection unit according to another exemplary embodiment of the present invention; and
FIG. 6 is a control flowchart of a control method according to an exemplary embodiment of the present invention.

### DETAILED DESCRIPTION OF EXEMPLARY EMBODIMENTS OF THE INVENTION

Below, exemplary embodiments of the present invention will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

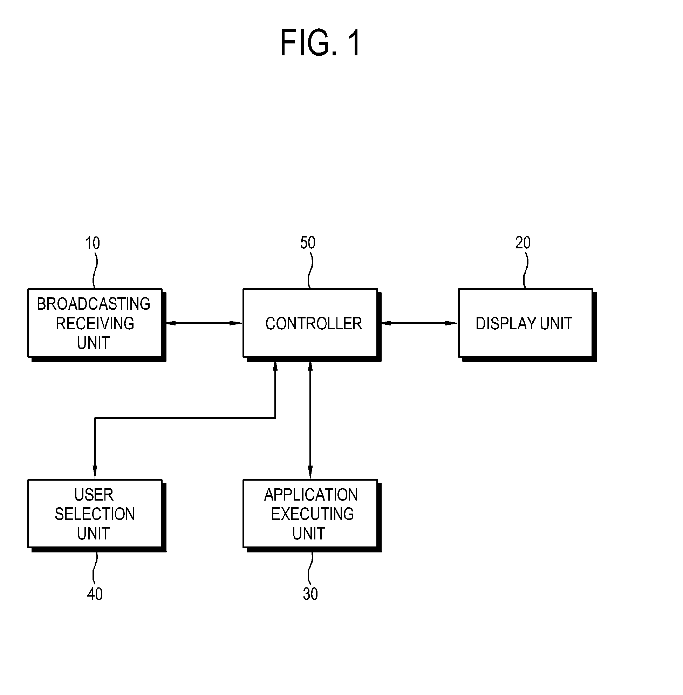

FIG. 1 is a control block diagram of a display apparatus according to an exemplary embodiment of the present invention. As shown therein, the display apparatus includes a broadcasting receiving unit 10, a display unit 20, an application executing unit 30, a user selection unit 40, and a controller 50 controlling them. The display apparatus in this exemplary embodiment may be achieved by a television that receives and displays a broadcasting signal, and may include a monitor connected to a computer system or a computer which can receive a broadcasting signal through a network interface. Further, the display apparatus in this exemplary embodiment may execute various applications as well as displaying a broadcasting signal.

The broadcasting receiving unit 10 may include a tuner to receive various contents contained in a broadcasting signal, a network interface to receive a broadcasting signal through a network, etc.

The display unit 20 displays an image processed by the controller 50. The display unit 20 may include a liquid crystal display (LCD) panel with a liquid crystal, an organic light emitting diode (OLED) panel or a plasma display panel (PDP), and a panel driver to drive this panel.

The application executing unit 30 stores at least one application to be executed in the display apparatus, and executes an application selected by a user. The application in this exemplary embodiment may include a graphic user interface related to a multimedia file, or an on screen display (OSD) for adjusting conditions of the display unit 20. Thus, the application executing unit 30 may include an application program or an OSD generator to reproduce the multimedia file and adjust various reproductive conditions under control of a user.

With rapid development of the television, the television has recently supported complex functions of reproducing various contents beyond a limited function of displaying a broadcasting signal. Such a display apparatus may enable web-surfing through a network interface and communication with a contents provider in addition to reproduction of audio and video files. To execute these diverse functions, the display apparatus needs to support various applications. The application executing unit 30 and the controller 50 may be merged into one chip as a single processing block, or alternatively may be provided as physically separated processing blocks.

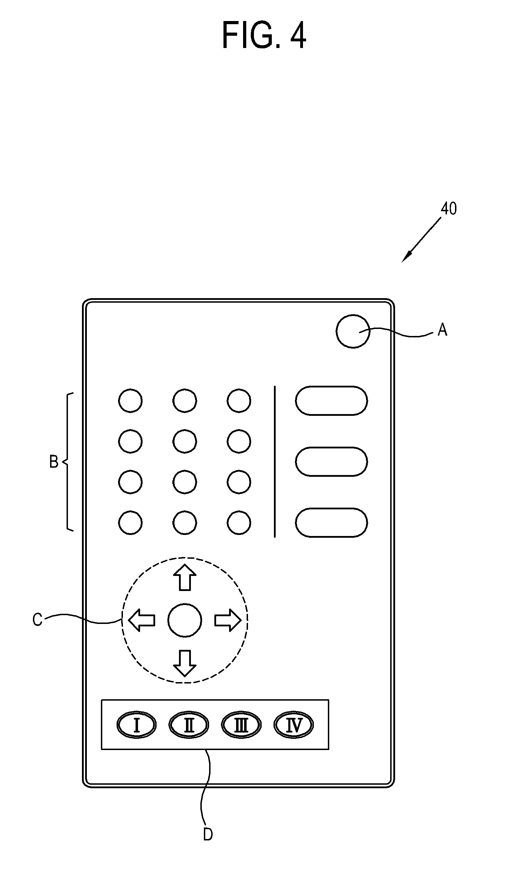

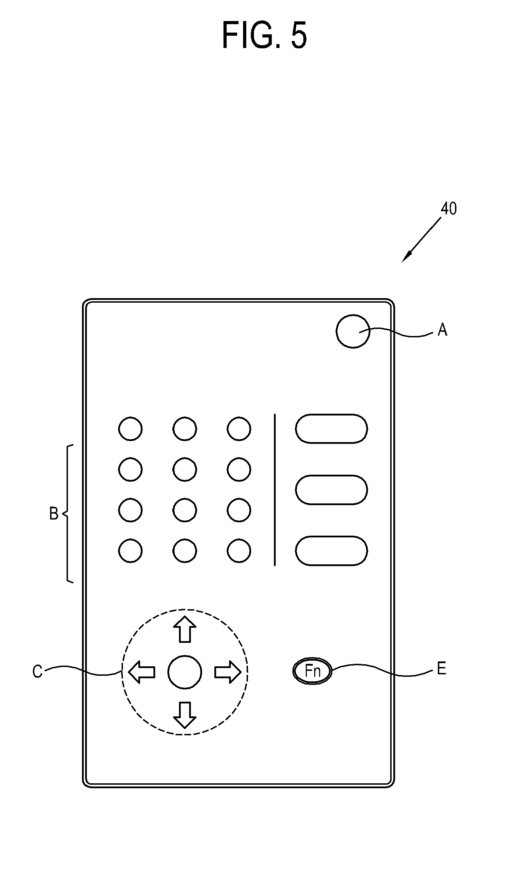

The user selection unit 40 may be provided as a user interface allowing a user to input various selection signals, which outputs the input selection signals to the controller 50. As shown in FIGs. 4 and 5, the user selection unit 40 in this exemplary embodiment may be provided as a remote controller that can remotely control the display apparatus, and a touch panel that receives a selection signal through a pointing device. Also, the user selection unit 40 may include an input unit such as various buttons provided in a housing of the display apparatus, a keyboard, a mouse, etc. Through the user selection unit 40, a user may execute an application and adjust a display area for an application running window.

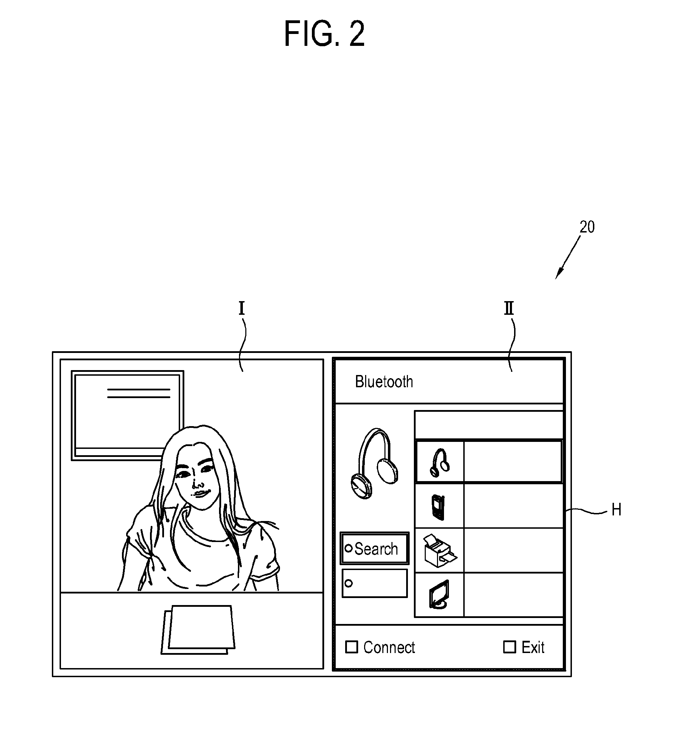

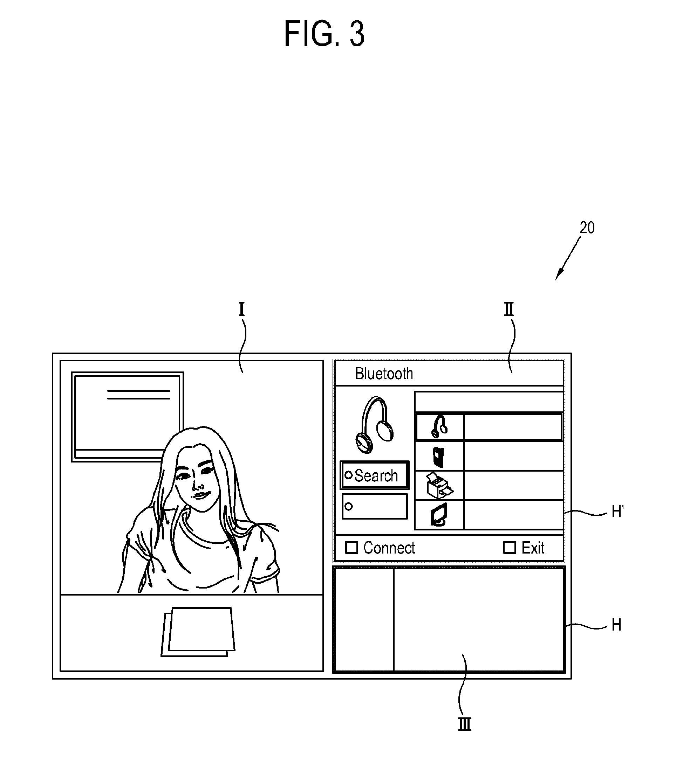

If an application is executed while the broadcasting signal is displayed on the display unit 20, the controller 50 controls the broadcasting signal and at least one running window for executing the application to be displayed in different display areas so as to prevent the broadcasting signal and the running window from overlapping with each other. Here, the application running window indicates a user interface to execute the application, which is illustrated in FIGs. 2 and 3. The controller 50 includes a video processing block, e.g., a decoder and a scaler to process and display the broadcasting signal, and controls the sizes and the aspect ratios of the broadcasting signal and the application running window. The video processing block such as the decoder or the scaler may be merged with a control block for a control function, or may be provided as a separate processing block.

FIGs. 2 and 3 show the display unit 20 for explaining the application running window of the display apparatus. FIG. 2 illustrates that one application running window is displayed while the broadcasting signal is displayed, and FIG. 3 illustrates that two application running windows are displayed while the broadcasting signal is displayed.

As shown therein, if a user selects the application to be executed while viewing the broadcasting signal, the controller 50 displays the broadcasting signal and the application running window on a first display area I and a second display area II of the display unit 20, respectively. Since the first display area I and the second display area II are not overlapped with each other and the broadcasting signal and the application running window are displayed on the different display areas, the broadcasting signal is not covered with the application running window. Thus, a user can execute the application or adjust control items related to the application while viewing the broadcasting signal.

When the application running window is displayed, edges of the application running window are highlighted (refer to "H"). The highlight H is given to a display area being currently controlled between two contents, thereby allowing a user to recognize it. Further, a user can control the broadcasting signal while the application running window is displayed. In this case, edges of the first display area I for the first display area are highlighted as the broadcasting signal is selected.

As shown in FIG. 3, if an additional application is selected to be executed, the application running window for the additional application is displayed on a third display area III below the second display area II. In this case, edges of the third display area III are highlighted (refer to "H"), while the highlight of the second display area III is inactivated (refer to "H"').

FIGs. 4 and 5 show a remote controller as the user selection unit 40. The user selection unit 40 of FIG. 4 includes a power button A, numeral buttons B, arrow buttons C and shortcut buttons D. Through the shortcut buttons D corresponding to the display areas I, II, III and IV, a user may select one of plural display areas I, II, III and IV and control contents corresponding to the display area I, II, III and IV. For example, in FIG. 3, the highlight H is given to the edges of the third display area III, so that a user can control the application displayed on the third display area III. That is, the controller 50 receives a control signal for executing the application displayed on the third display area III, and executes the application on the basis of the received control signal. On the other hand, it may be impossible for a user to control the first display area I having no highlight H or the second area II where the highlight is inactivated H'. If a display area other than the third display area III (e.g., area I or II) is selected through the shortcut button D, the highlight H shifts to the selected display area I or II and controllable contents are also changed. If the first display area I where the broadcasting signal is displayed is selected, a user is allowed to change the volume, the channel, etc. of the broadcasting signal.

Thus, a user can easily select the display areas I, II, III and IV through the shortcut buttons D, and control desired contents (the broadcasting signal or the application running window). Here, the number of shortcut buttons D provided in the user selection unit 40 may be determined according to the number of contents displayable or executable on the display unit 20.

The user selection unit 40 of FIG. 5 includes function buttons (Fn) E for shifting the highlight H instead of the plurality of shortcut buttons corresponding to the display areas I, II, III and IV. In this exemplary embodiment, if the arrow button C is selected while pressing the function button E, the highlight H for activating the display areas I, II, III and IV is shifted among the display areas I, II, III and IV in a direction indicated by the arrow button C. According to the present exemplary embodiment, there is no limit to the number of shortcut buttons like those shown in FIG. 4, and the user selection unit 40 has a simple configuration since the plurality of shortcut buttons is not needed.

Alternatively, the application running window may be displayed while displaying not the broadcasting signal but an electronic program guide (EPG) screen or a web screen. Further, the broadcasting signal or other contents may be selected while displaying the application running window.

Also, the number of display areas is not limited to two or three like those of the foregoing exemplary embodiments, and may be varied depending on the size of the display unit 20 or the number of applications supportable by the display apparatus.

According to another exemplary embodiment, the size of the first display area I where the broadcasting signal is displayed may decrease as the number of application running window displayed on the display unit 20 increases. The size of the first area I and the sizes of the second and third display areas II and III where the application running window is displayed may be automatically adjustable to provide an optimum display condition to a user, or may be adjustable in proportion among the display areas I, II and III through the user selection unit 40.

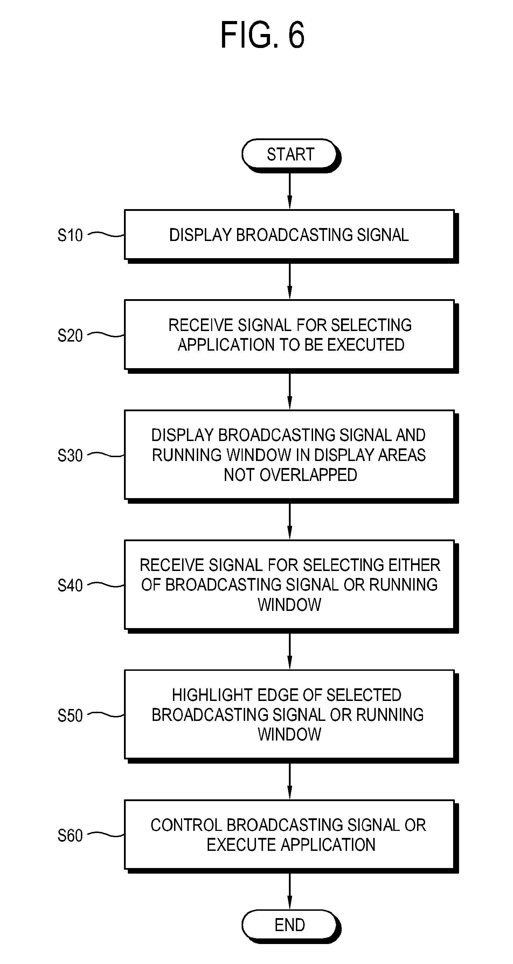

FIG. 6 is a control flowchart of a control method of the display apparatus of FIG. 1. Referring to FIG. 6, the control method of the display apparatus in this exemplary embodiment is as follows.

At operation S10, the broadcasting signal is displayed on the display unit 20.

When receiving the selection signal for selecting the execution of the application from a user at operation S20, at operation S30 the controller 50 displays the broadcasting signal and the application running window on the display areas I, II and III which are not overlapped one another.

At operation S40, it may be possible to receive a signal for selecting either of the broadcasting signal or at least one running window in the plurality of display areas I, II and III. At operation S50, the selected broadcasting signal or running window is highlighted at the edges thereof.

The controller 50 may receive a control signal for controlling the highlighted broadcasting signal or executing the highlighted application, and correspondingly control the contents.

According to an exemplary embodiment of the present invention, there are provided a display apparatus and a control method of the same, in which a user can execute a desired application while viewing a broadcasting signal to thereby support multi-tasking of a user, and the broadcasting signal and the application running window can be displayed in parallel with each other to thereby potentially avoid interrupting viewing.

As described above, an aspect of the present invention provides a display apparatus and a control method of the same, which can execute an application without interrupting view of a broadcasting signal.

Another aspect of the present invention is to provide a display apparatus and a control method of the same, which can easily switch between a plurality of display areas.

Although a few preferred embodiments have been shown and described, it will be appreciated by those skilled in the art that various changes and modifications might be made without departing from the scope of the invention, as defined in the appended claims.

## Claims

1. A display apparatus comprising:
a display unit;
a broadcasting receiving unit which receives a broadcasting signal; and
a controller which controls the display unit to display the broadcasting signal and at least one window for executing a selected application,
wherein, if the application is selected to be executed while the broadcasting signal is displayed on the display unit, the broadcasting signal and the at least one window are displayed on different display areas of the display unit so that the display of the broadcasting signal and the at least one window are not overlapped.

2. The display apparatus according to claim 1, further comprising a user selection unit operable to select one of the display areas and the at least one window.

3. The display apparatus according to claim 2,
wherein the user selection unit includes a plurality of shortcut buttons corresponding to the display areas, respectively, and
wherein the display area is selected corresponding to a shortcut button being selected from the plurality of shortcut buttons.

4. The display apparatus according to claim 2, wherein at least one of the display of the broadcasting signal and the at least one window selected by the user selection unit is highlighted at edges thereof.

5. The display apparatus according to claim 2, wherein the controller receives a control signal for controlling a selected one of the broadcasting signal and the executing of the application, and controls the selected one of the broadcasting signal and the executing of the application based on the received control signal.

6. The display apparatus according to claim 1, wherein the selected application includes a graphic user interface related to multimedia files.

7. The display apparatus according to claim 1, wherein a size of a display window including the display of the broadcasting signal changes based on a size of the at least one window or a number windows included in the at least one window.

8. The display apparatus according to claim 2, wherein a size of a display window including the display of the broadcasting signal and the at least one window is adjustable based on an input received through the user selection unit.

9. The display apparatus according to claim 1, wherein a size of a display window including the display of the broadcasting signal and the at least one window is automatically adjustable.

10. A method of controlling a display apparatus having a broadcasting receiving unit operable to receive a broadcasting signal, and a display unit, the method comprising:
receiving a selection signal selecting an application to be executed while the broadcasting signal is displayed on the display unit; and
displaying the broadcasting signal and at least one window for executing the application on different display areas of the display unit so that the broadcasting signal and the window are not overlapped.

11. The method according to claim 10, further comprising:
receiving a control signal for controlling one of displaying of the broadcasting signal and executing the application displayed; and
controlling the one of the displaying of the broadcasting signal and the executing the application based on the received control signal.

12. The method according to claim 11, further comprising:
receiving a selection signal for selecting one of the displayed broadcasting signal and the at least one window; and
highlighting edges of the one of the selected broadcasting signal and the at least one window.

13. The method according to claim 10, further comprising adjusting a size of a display window including the display of the broadcasting signal changes based on a size of the at least one window displayed on the display unit.

14. The method according to claim 10, further comprising adjusting a size of a display window including the display of the broadcasting signal changes based on a number of windows included in the at least one window displayed on the display unit.

15. The method according to claim 11, further comprising adjusting a size of a display window including the display of the broadcasting signal and the at least one window based on an input received through the user selection unit.
